# NEUE EUROPÄISCHE PATENTSCHRIFT

(11) **EP 1 236 005 B2**
(45) Veröffentlichungstag und Bekanntmachung des Hinweises auf die Entscheidung über den Einspruch: **01.02.2012**
(45) Hinweis auf die Patenterteilung: 28.04.2004
(21) Anmeldenummer: 00977589.1
(22) Anmeldetag: 28.11.2000
(51) Int. Cl.: F16L 55/165, E21B 7/20, E21B 19/086, E21B 19/08

(54) **SEILZUGVORRICHTUNG FÜR BERST-/AUFWEITVORRICHTUNGEN**
CABLE TENSIONING DEVICE FOR BURSTING/FLARING DEVICES
DISPOSITIF DE TENSION DE CABLE POUR DISPOSITIFS D'ECLATEMENT/D'ELARGISSEMENT

(30) Priorität: 02.12.1999 DE 19958003; 11.03.2000 DE 10011994
(43) Veröffentlichungstag der Anmeldung: 04.09.2002
(73) Patentinhaber: Tracto-Technik GmbH, 57368 Lennestadt (DE)
(72) Erfinder: PÜTTMANN, Franz-Josef, 57368 Lennestadt (DE)
(74) Vertreter: König, Gregor Sebastian
(86) Internationale Anmeldenummer: PCT/EP2000/011848
(87) Internationale Veröffentlichungsnummer: WO 2001/040699

(56) Entgegenhaltungen:
- EP-A- 0 947 663
- FR-A- 2 592 129
- US-A- 4 615 509
- US-A- 4 983 071

## Beschreibung

Die Erfindung betrifft ein Schub- oder Zuggerät für Bohr-, Berst- oder Aufweitvorrichtungen für Horizontalvortriebsarbeiten beispielsweise in einem unterirdischen Kanal und nimmt die Priorität der deutschen Patentanmeldungen 199 58 003.0 und 100 11 994.8-24 in Anspruch, auf die inhaltlich Bezug genommen wird.

Ein solcher Kanal kann beispielsweise in Form einer Pilotbohrung erstellt werden oder in Form einer zu ersetzenden unterirdischen Altleitung vorliegen. Das Erstellen einer solchen Pilotbohrung ist in der deutschen Offenlegungsschrift 197 05 346 beschrieben.

Das zerstörende Ersetzen einer unterirdischen Altleitung ist zum Beispiel in der deutschen Patentschrift 197 47 250 beschrieben. Beim Erstellen oder Aufweiten der vorgenannten Pilotbohrungen oder dem Erneuern von Altleitungen oder auch dem Einziehen einer neuen Leitung in die Pilotbohrung sind verschiedene Systeme für den Vortrieb der Bohr-, Berst- oder Aufweitvorrichtung, mit deren Hilfe die Pilotbohrung erstellt und in ihrem Querschnitt erweitert oder die Altleitung, beispielsweise durch einen Schneidkopf zerstört wird, bekannt. Unter anderem sind, wie in der deutschen Patentschrift 195 48 835 beschrieben, dynamisch schlagende Schlagvortriebsgeräte ebenso, wie die in der deutschen Patentschrift 197 25 628 beschriebenen Geräte mit statischem Vortrieb mittels eines Zug- oder Schubgestänges, bekannt.

Ebenfalls anzutreffen ist die Kombination eines dynamisch arbeitenden Schlagvortriebsgerätes mit einer zusätzlichen Zugvorrichtung, beispielsweise in Form einer Seilwinde. Der Hauptanteil der Vortriebsarbeit wird dabei durch den dynamisch schlagenden Antrieb geleistet, während die Winde in erster Linie zur Führung des Schlagvortriebsgerätes eingesetzt wird. Bei einer solchen Kombination entstehen in der Praxis jedoch erhebliche Probleme, da die Winde unter den dynamischen Schlagkräften des Schlagvortriebsgerätes stark beansprucht wird und insbesondere Schäden an den Trägem des Spillkopfes auftreten.

Ein weiteres Problem besteht darin, eine konstante Zugkraft mittels einer Winde auf das dynamisch fortschreitende Schlagvortriebsgerät zu übertragen. Dies ist besonders schwierig, in Fällen, in denen das Schiagvortriebsgerät aufgrund eines hohen Umgebungswiderstandes einen äußerst langsamen Vortrieb ausführt und - sofern die Winde keine hierfür besonders eingerichtete Steuerung aufweist - zu einer Überbeanspruchung des Hydraulikantriebs der Winde führen kann.

Die vorgenannten Probleme werden im Bereich des Schlagbohrens dadurch verstärkt, daß die Entwicklung der dynamischen Schlagvortriebsgeräte von zunehmender Größe gekennzeichnet ist, während entsprechende Winden kaum zur Verfügung stehen. Größere Schlagvortriebsgeräte setzen die Winden einer besonderen Beanspruchung aus, da solchen Geräte eine relativ verringerte Mantelreibung bei extremem Wechsel von Be- und Entlastung zu eigen ist.

Soweit größere Winden im Stande der Technik bekannt sind, ist deren Anschaffung aufgrund des im Verhältnis zum Schlagvortriebsgerät hohen Anschaffungspreises unwirtschaftlich. Der Versuch, zu klein dimensionierte Winden mit den üblichen Schlagvortriebsgeräten einzusetzen, führt regelmäßig zu einer Beschädigung der Winde.

Aus der deutschen Patentschrift 196 08 056 ist eine Vorrichtung zum Verbinden eines Rohrstranges mit einem Spannrahmen und einem linearen Spannantrieb bekannt, die über ein Zugmittel, wie beispielsweise eine Kette, eine Zugkraft zum Verbinden von einzelnen Rohren hinter dem Horizontalvortriebsgerät erzeugt. Eine derartige Vorrichtung wurde in der Praxis auch für den Vortrieb eines Erdvortriebsgerätes eingesetzt und dabei am Vortriebskopf des Gerätes befestigt. Die Verwendung einer Vorrichtung gemäß der deutschen Patentschrift 196 08 056 für den ergänzenden und leitenden Vortrieb von schlagenden Horizonalvortriebsgeräten verringert zwar bei entsprechender Ausgestaltung die im Stande der Technik von Spillwinden her bekannten Materialprobleme, führt aber zu eigenen Schwierigkeiten aufgrund der nicht kontinuierlich wirkenden Zugkraft.

Zu gleichen Problemen führen die im Stande der Technik bekannten Seilzugvorrichtungen, die insbesondere als Handseilzug bekannt sind, aber auch hydraulisch betrieben werden können. Sämtliche solcher Vorrichtungen weisen einen diskontinuierlichen Seilzug auf, da der Linearantrieb in der Leerhubphase lediglich eine Arretierung des Seils zuläßt und dabei den Seilvortrieb unterbricht. Solche Vorrichtungen eignen sich daher in der Praxis nicht als Windenersatz.

Des weiteren ist es bekannt, Berst-, Aufweit- oder Bohrgeräte mit Hilfe eines Schub- oder Zuggestänges durch das Erdreich oder durch ein Rohr zu bewegen. Eine entsprechende Vorrichtung ist aus der deutschen Offenlegungsschrift 197 25 628 bekannt. Auch hierbei ist eine diskontinuierliche Bewegung von Nachteil, da diese nicht nur den Vortrieb erschwert, sondern auch verlangsamt.

Aus der französischen Offenlegungsschrift 2 592 129 ist eine Schubvorrichtung zum grabenlosen Verlegen von Rohren bekannt. Dabei ist das Rohr über Klemmbacken mit zwei parallel angeordneten Schubzylindem verbunden. Diese Schubzylinder werden gleichzeitig betätigt und schieben über die das Rohr haltenden Klemmbacken dieses vorwärts. Hier ist ebenfalls eine diskontinuierliche Bewegung des Rohr zu erkennen, da nach jedem Hub der Zylinder die Klemmbacken gelöst werden müssen und die Schubzylinder erneut ausgefahren werden.

Der Erfindung liegt nun die Aufgabe zugrunde, eine Schub- oder Zugvorrichtung für ein Horizontalvortriebsgerät zu schaffen, welche die Nachteile herkömmlicher Geräte beim Einsatz mit unterirdischen Horizontalvortriebsgeräten vermeidet.

Die Aufgabe wird gelöst durch den Gegenstand der unabhängigen Ansprüche. Vorteilhafte Ausführungsformen sind in den Unteransprüchen wiedergegeben.

Im einzelnen kann die erfindungsgemäße Aufgabe durch die Merkmale des Anspruchs 1 gelöst werden.

Die erfindungsgemäße Vorrichtung erlaubt es im Bereich der Zugmittel, die Vorteile der kostengünstigen und stabilen Linearantriebe mit den Vorteilen des kontinuierlichen Seilzugs einer Spillwinde zu verbinden. Erfindungsgemäß lassen sich auch mehr als zwei Zugeinheiten einsetzen.

Mit der erfindungsgemäßen Vorrichtung läßt sich eine weitgehend kontinuierliche Bewegung des Bohrgerätes mit einer Vorrichtung in kompakter Bauweise erreichen, die den auf der Baustelle gewünschten geringen Platzbedarf bei leichter Transportabilität aufweist.

Die Erfindung wird im folgenden anhand eines in der Zeichnung dargestellten Ausführungsbeispiels des näheren erläutert.

In der Zeichnung zeigen:

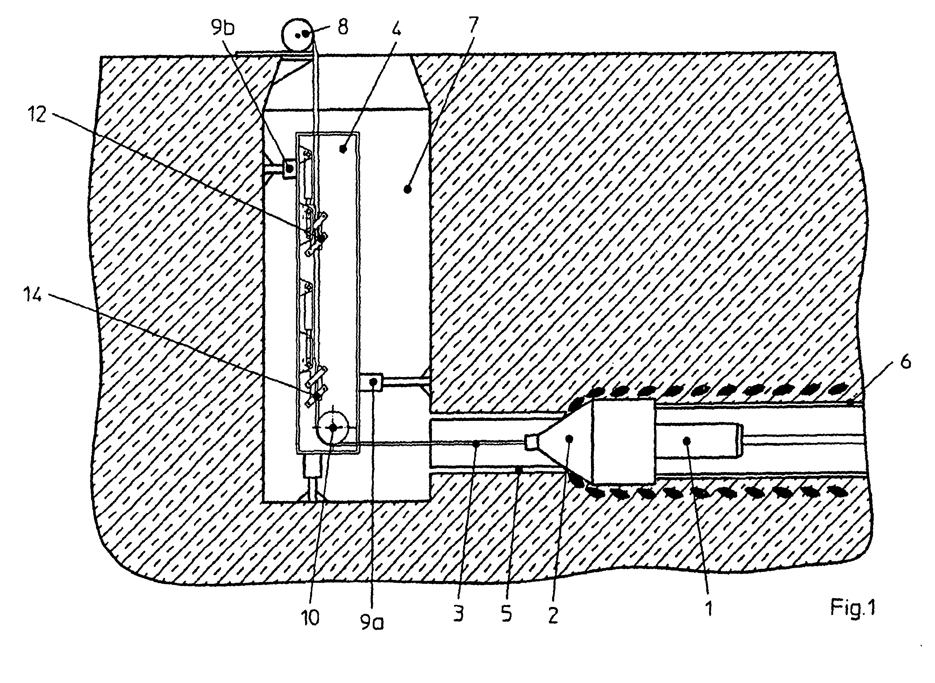

Fig. 1 eine schematische Darstellung einer Zugvorrichtung in vertikaler Anordnung;

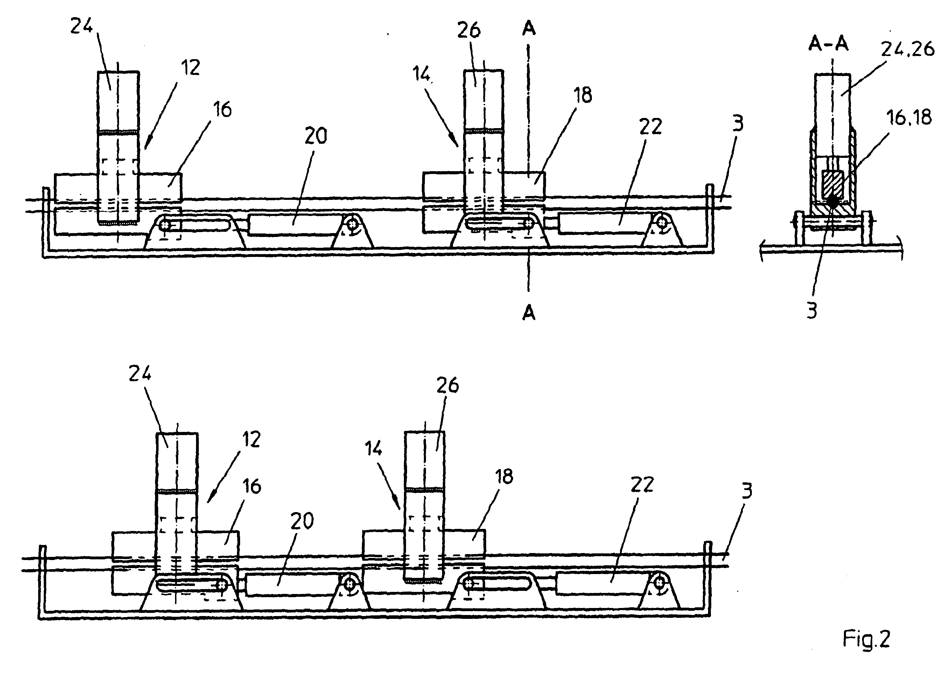

Fig. 2 eine Detailansicht der erfindungsgemäßen Vorrichtung der Fig. 1;

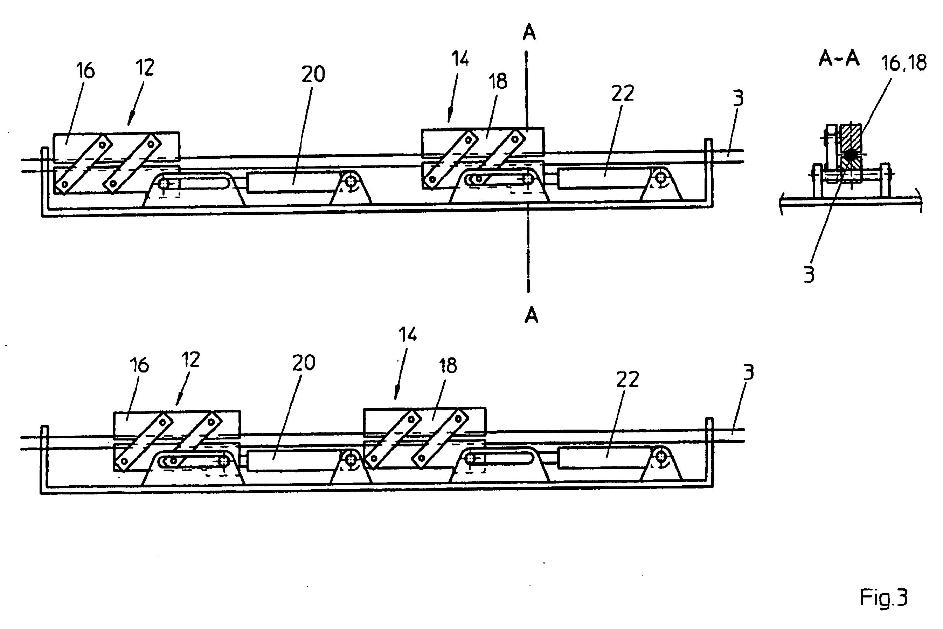

Fig. 3 eine alternative Ausführungsform einer Zugvorrichtung;

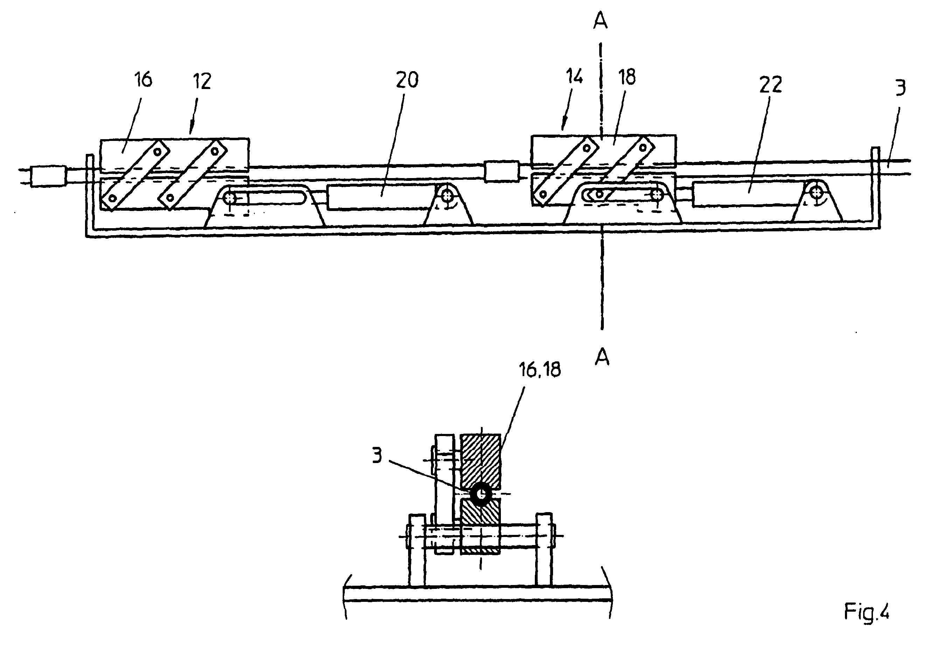

Fig. 4 eine Ausführungsform entsprechend der Fig. 3 mit Gestängeschüssen;

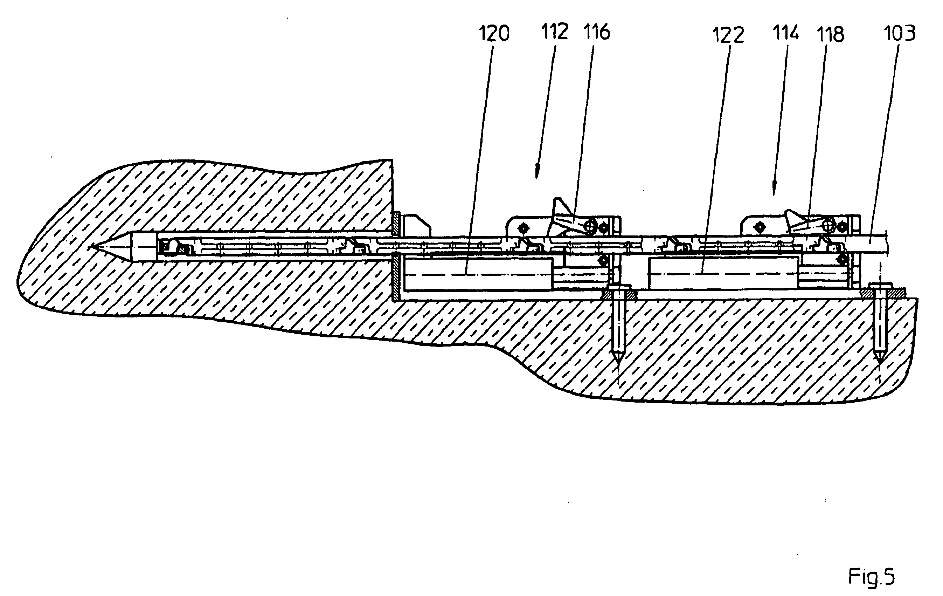

Fig. 5 eine Ausführungsform mit Y-Klinkenantrieb.

Ein schlagendes Horizontalvortriebsgerät 1 mit einem Berstkopf 2 ist über ein Seil 3 mit einer vertikal in einer Bohrgrube angeordneten Seilzugvorrichtung 4 verbunden. Beim Vortrieb des Berstgerätes 1, 2 wird die im Erdreich befindliche Altleitung 5 zerstört und durch eine neue Leitung 6 ersetzt. Das Seil 3 ist an der Spitze des Berstkopfes 2 befestigt und über eine Umlenkrolle 10 der Seilzugvorrichtung 4 durch die Grube 7 vertikal zu einer Haspel 8 an die Erdoberfläche geführt. Die Seilzugvorrichtung 4 ist mit Stützen 9 gegen die Grubenwand gesichert.

Die Zugvorrichtung 4 weist unabhängige Zugmittel 12, 14 auf, die mittels Klemmbacken 16,18 an dem Seil angreifen.

Die Klemmbacken können durch hydraulische Zylinder 24, 26 bewegbar sein. Alternativ können sie mechanisch nach dem Prinzip einer Haspelwinde betrieben sein.

Die Zugmittel 12, 14 besitzen Zylinder 20, 22, mit deren Hilfe ein linearer Vorschub des Seils 3 über Klemmbacken 16, 18 möglich ist. Über eine Steuerung (nicht dargestellt) werden die hydraulischen Zylinder 20, 22 wechselweise mit Druck beaufschlagt, so daß der jeweils keine Zugkraft ausübende Zylinder einen Retraktionshub ausführt, während das Seil durch den jeweils anderen Zylinder bewegt wird. Entsprechend werden die Zylinder 24, 26 zum Lösen und Klemmen des Seils 3 wechselweise beaufschlagt.

Die Zugmittel 12, 14 können erfindungsgemäß auch als Gestängeschüsse 3 ausgebildet sein, die zu einem Gestänge verbunden sind und beim Ziehen einzeln abgebaut werden. Hierfür sind insbesondere die in der deutschen Offenlegungsschrift 199 22 813 erwähnten Leitergestänge vorteilhaft. Als Antrieb eignet sich dann auch der in der deutschen Offenlegungsschrift 198 49 611 beschriebene Y-Klinkenantrieb, insbesondere mit einem Leitergestänge. Als Schubmittel läßt sich die beschriebene Vorrichtung in entsprechender Weise, insbesondere mit einem Gestänge einsetzen. Hierbei besitzen die Schubmittel 112,114 Zylinder 120, 122 und sind als Y-Klinken 116, 118 ausgebildet, um das Leitergestänge 103 zu bewegen. Die Ansteuerung der Schub/Zugzylinder ist vorzugsweise über das Betriebsmedium gekoppelt, so daß die Zylinderbewegung zwangssynchronisiert ist.

## Patentansprüche

1. Schub- oder Zugvorrichtung für eine horizontale Bohr-, Berst- oder Aufweitvorrichtung mit mindestens einem als Gestänge (3) ausgebildeten Schub- oder Zugmittel zur Verbindung mit der Bohr-, Berst- oder Aufweitvorrichtung, **dadurch gekennzeichnet, daß** mindestens zwei Schub- oder Zugelemente (12, 13) zur Bewegung des Gestänges (3) einander abwechselnd eine Schub- oder Zugkraft auf das Gestänge (3) ausüben, wodurch eine kontinuierliche Vortriebsbewegung des Gestänges (3) ermöglicht wird.

2. Schub- oder Zugvorrichtung nach Anspruch 1, **dadurch gekennzeichnet, daß** das Gestänge aus miteinander gekuppelten Gestängeschüssen (3) besteht.

3. Schub- oder Zugvorrichtung nach einem der vorhergehenden Ansprüche, **dadurch gekennzeichnet, daß** die Schub- oder Zugelemente (12, 14) als hydraulisch beaufschlagte Zylinder ausgebildet sind.

4. Schub- oder Zugvorrichtung nach einem der vorhergehenden Ansprüche, **dadurch gekennzeichnet, daß** die Schub- oder Zugkraft über mechanisch durch Schub oder Zug verriegelnde Klemmbacken (16, 18) auf das Gestänge (3) übertragen wird.

5. Schub- oder Zugvorrichtung nach Anspruch 3, **dadurch gekennzeichnet, daß** die Schub- oder Zugkraft über ein Leitergestänge mit Y-Klinken (116, 118) übertragen wird.

6. Schub- oder Zugvorrichtung nach Anspruch 3, **dadurch gekennzeichnet, daß** die Zylinder (20, 22) synchronisiert sind.

7. Verfahren zum Betrieb einer Zugvorrichtung nach einem der vorhergehende Ansprüche, **dadurch gekennzeichnet, daß** die Zugvorrichtung auf ein vertikal geführtes Gestänge (3) einwirkt und in einer Zielgrube (7) betrieben wird.

8. Horizontalvortriebsgerät mit einem angelenkten Gestänge (3) und einer auf das Gestänge (3) wirkenden Schub- oder Zugvorrichtung nach einem der Ansprüche 1 bis 6.

9. Verfahren zum Erzeugen einer Aufweitbohrung oder Sanierung einer Altleitung mit einem schlagenden Horizontalvortriebsgerät nach Anspruch 8, **dadurch gekennzeichnet, daß** das Horizontalvortriebsgerät an einem Gestänge (3) durch eine Pilotbohrung/Altleitung (5) geführt wird und das Gestänge (3) über einen Linearantrieb (12, 14) kontinuierlich bewegt wird.

10. Verfahren nach Anspruch 9, **dadurch gekennzeichnet, daß** die kontinuierliche Bewegung über Gestängeschüsse, die zu dem Gestänge verbunden sind, bewirkt wird.

## Claims

1. Pushing or pulling device for a horizontal drilling, rupturing or expanding device having at least one pushing or pulling means, which is designed as a rod assembly (3), for connecting to the drilling, rupturing or expanding device, **characterised in that** at least two pushing or pulling elements (12, 13) for moving the rod assembly (3) alternately exert a pushing or pulling force on the rod assembly (3), whereby a continuous driving movement of the rod assembly (3) is enabled.

2. Pushing or pulling device according to Claim 1, **characterised in that** the rod assembly consists of rod lengths (3) which are coupled to one another.

3. Pushing or pulling device according to any one of the preceding claims, **characterised in that** the pushing or pulling elements (12, 14) are designed as hydraulically actuated cylinders.

4. Pushing or pulling device according to any one of the preceding claims, **characterised in that** the pushing or pulling force is transmitted to the rod assembly (3) by means of clamping jaws (16, 18) mechanically locking by means of pushing or pulling.

5. Pushing or pulling device according to Claim 3, **characterised in that** the pushing or pulling force is transmitted via a guide rod assembly with Y-catches (116, 118).

6. Pushing or pulling device according to Claim 3, **characterised in that** the cylinders (20, 22) are synchronised.

7. Method for operating a pulling device according to any one of the preceding claims, **characterised in that** the pulling device acts upon a vertically guided rod assembly (3) and is operated in a target trench (7).

8. Horizontal driving device having an articulated rod assembly (3) and a pushing or pulling device, which acts upon the rod assembly (3), according to any one of Claims 1 to 6.

9. Method for generating an expanding bore or for renovating an existing conduit with a percussive horizontal driving device according to Claim 8, **characterised in that** the horizontal driving device is guided on a rod assembly (3) through a pilot bore/existing conduit (5) and the rod assembly (3) is continuously moved by means of a linear drive (12, 14).

10. Method according to Claim 9, **characterised in that** the continuous movement is brought about by means of rod lengths which are joined to the rod assembly.

## Revendications

1. Dispositif de poussée ou de traction pour un dispositif horizontal de perçage, éclatement ou élargissement, comprenant au moins un moyen de poussée ou de traction, sous forme de tringlerie (3), destiné à être relié au dispositif de perçage, éclatement ou élargissement **caractérisé en ce qu'**au moins deux éléments de poussée ou de traction (12, 13), pour déplacer la tringlerie (3), exercent alternativement une force de poussée ou de traction sur la tringlerie (3), permettant d'obtenir un déplacement d'avancement continu de la tringlerie (3).

2. Dispositif de poussée ou de traction selon la revendication 1, **caractérisé en ce que** la tringlerie est formée de tronçons de tringlerie (3) accouplés ensemble.

3. Dispositif de poussée ou de traction selon l'une des revendications précédentes, **caractérisé en ce que** les éléments de poussée ou de traction (12, 14) sont réalisés sous la forme de vérins sollicités hydrauliquement.

4. Dispositif de poussée ou de traction selon l'une des revendications précédentes, **caractérisé en ce que** la force de poussée ou de traction est transmise à la tringlerie (3), par l'intermédiaire de mâchoires de serrage (16, 18) verrouillant mécaniquement par poussée ou traction.

5. Dispositif de poussée ou de traction selon la revendication 3, **caractérisé en ce que** la force de poussée ou de traction est transmise par l'intermédiaire d'une tringlerie en échelle, présentant des cliquets en Y (116, 118).

6. Dispositif de poussée ou de traction selon la revendication 3, **caractérisé en ce que** les vérins (20, 22) sont synchronisés.

7. Procédé pour l'actionnement d'un dispositif de traction selon l'une des revendications précédentes, **caractérisé en ce que** le dispositif de traction agit sur une tringlerie (3) guidé verticalement et est actionné dans une fosse de guidage (7).

8. Appareil d'avancement horizontal muni d'une tringlerie (3) articulé et d'un dispositif de poussée ou de traction agissant sur la tringlerie (3), selon l'une des revendications 1 à 6.

9. Procédé pour la réalisation d'un perçage d'élargissement ou d'assainissement d'une vieille conduite avec un dispositif d'avancement horizontal à percussion selon la revendication 8, **caractérisé en ce que** le dispositif d'avancement horizontal est guidé sur une tringlerie (3), au moyen d'un perçage pilote/vieille conduite (5), et la tringlerie (3) est déplacé de façon continue par l'intermédiaire d'un entraînement linéaire (12, 14).

10. Procédé selon la revendication 9, **caractérisé en ce que** le mouvement continu est provoqué par des tronçons de tringlerie, reliés pour former la tringlerie.
